(19) Europäisches Patentamt
European Patent Office
Office européen des brevets

(11) **EP 3 103 674 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(21) Anmeldenummer: **15171921.8**

(22) Anmeldetag: **12.06.2015**

(51) Int Cl.:
*B60L 53/38* (2019.01)   *H02J 5/00* (2016.01)
*H01F 38/14* (2006.01)   *H02J 7/00* (2006.01)
*H02J 50/10* (2016.01)   *B60L 53/36* (2019.01)
*H01F 27/36* (2006.01)   *H02J 50/70* (2016.01)

(54) **POSITIONSBESTIMMUNGSSYSTEM, VERFAHREN ZUR POSITIONSBESTIMMUNG UND SYSTEM ZUR INDUKTIVEN ENERGIEÜBERTRAGUNG MIT POSITIONSBESTIMMUNGSSYSTEM**

POSITIONING SYSTEM, METHOD FOR POSITIONING AND SYSTEM FOR INDUCTIVE ENERGY TRANSMISSION WITH POSITIONING SYSTEM

SYSTEME DE DETERMINATION DE POSITION, PROCEDE DE DETERMINATION DE POSITION ET SYSTEME INDUCTIF DE TRANSFERT D'ENERGIE A L'AIDE D'UN SYSTEME DE DETERMINATION DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.12.2016 Patentblatt 2016/50**

(73) Patentinhaber: **Brusa Elektronik AG**
**9466 Sennwald (CH)**

(72) Erfinder:
• **KRAUSE, Axel**
**9650 Nesslau (CH)**
• **BÖHLER, Lukas**
**7323 Wangs (CH)**

(74) Vertreter: **Rösler, Frank**
**Rösler · Rasch · van der Heide & Partner**
**Patent- und Rechtsanwälte PartG mbB**
**Bodenseestraße 18**
**81241 München (DE)**

(56) Entgegenhaltungen:
WO-A1-2012/095896       DE-A1-102011 083 427
DE-A1-102012 019 751    JP-B2- 5 635 134
US-A1- 2012 262 002     US-A1- 2015 123 465

## Beschreibung

Die Erfindung betrifft ein Positionsbestimmungssystem für ein System mit wenigstens zwei Übertragerelementen zur induktiven Energieübertragung, nach dem Oberbegriff des Anspruchs 1, weiters ein Verfahren zur Bestimmung der relativen Position zweier Übertragerelemente zur induktiven Energieübertragung unter Verwendung eines derartigen Positionsbestimmungssystems, nach dem Oberbegriff des Anspruchs 7, sowie ein System zur induktiven Energieübertragung, insbesondere zum Laden von elektrisch antreibbaren Fahrzeugen, mit wenigstens zwei Übertragerelementen und einen Positionsbestimmungssystem, nach dem Oberbegriff des Anspruchs 11.

Zur Ladung der Traktionsbatterien von zumindest teilweise elektrisch antreibbaren Fahrzeugen kommen sowohl Systeme mit Ladekabeln als auch Systeme mit drahtloser Energieübertragung zum Einsatz. Eine Gruppe von derartigen Ladeanordnungen nutzt, wie beispielsweise in der US 20120119698 A1 beschrieben ist, orthogonalen Spulen zur Energieübertragung. Bei all diesen Systemen hängt die Effizienz der drahtlosen Energieübertragung von der Kopplung zwischen der sendenden Primärspule und der empfangenden Sekundärspule ab. Daher wird hier die bestmögliche gegenseitige Ausrichtung dieser beiden Spulen angestrebt. Um diese optimale Ladeposition zu bestimmen, sind bereits verschiedene Systeme vorgeschlagen worden. Die US 20120119698 A1 spricht zwar auch ein solches Positioniersystem an, ohne jedoch irgendeine funktionelle oder funktionell überschneidende Verbindung mit dem Energieübertragungssystem zu offenbaren.

In der EP2735083A1 ist eine berührungslose Positionserfassungsvorrichtung beschrieben, welche die korrekte Ausrichtung zwischen einer Primärspule in einer Ladevorrichtung und einer Sekundärspule des Fahrzeuges durch eine im Fahrzeug montierte Empfänger-Spule mit zwei gegensinnigen Wicklungen bewerkstelligt. Wenn sich diese Spule direkt über die Primärspule der Ladeeinrichtung befindet, heben sich die vom Magnetfeld der Primärspule bewirkten elektromotorischen Kräfte in den unterschiedlichen Wicklungen auf und zeigen durch den Spannungswert gleich Null an der Empfänger-Spule die optimale Position an.

Das System der WO2014068384A2 verwendet eine Serienschaltung einer zirkularen Spule mit einer Solenoid-Spule, um die optimale Ladeposition zu bestimmen.

Die DE 102010053058 A1 zeigt wiederum ein autonomes Positioniersystem, bei dem eine vom Energieübertragungssystem separate Spule am Fahrzeug ein Magnetfeld erzeugt, dessen Veränderung durch induktive Bauteile unterhalb des Fahrzeugs zur relativen Positionsbestimmung ausgewertet wird. Getrennt davon ist die Sendespule für die Energieübertragung angeordnet.

Beim System der DE 102011083427 A1 sind zur Positionsbestimmung von zueinander beweglichen Objekten eine Feldgeneratoreinheit zur Erzeugung eines elektrischen und/oder magnetischen Positionierfeldes und eine Feldmesseinheit zur Ermittlung einer positionsabhängigen Feldinformation vorgesehen. Zwischen diesen Einheiten sind weiters Feldkonzentratoren, beispielsweise aus ferromagnetischem Material, vorzugsweise ausgebildet als flache Ferritmatte, angeordnet, um die gewünschte Genauigkeit der Positionsbestimmung zu erzielen. Alternativ zu den Feldkonzentratoren kann eine separate Feldrückstreueinheit zum Rückstreuen des erzeugten Feldes vorgesehen sein. Die Sendespule für die Positionsbestimmung erzeugt auch gleichzeitig das Ladefeld zum induktiven Laden. Die Feldmesseinheit kann auch beispielsweise vier oder fünf Empfangsspulen aufweisen, wodurch sich die Positioniergenauigkeit weiter erhöht.

In der EP 2584665 A2 wird über die Möglichkeit eines Führungssystems über Funk oder auch auf Basis der Ermittlung der Kopplung zwischen Primär- und Sekundärseite nachgedacht, welches auch den Offset zwischen Primär- und Sekundärspule in einer Ebene bestimmbar macht. Als Beispiel wird eine Positionsüberwachung genannt, die in der Primärseite integriert ist und die Kopplung der magnetischen Resonanz zur Sekundärantenne detektiert und automatisch die gegenseitige Ausrichtung der Primärantenne zur Verbesserung der Kopplung vornimmt. Dies kann über ein auf Funkpositionsbestimmung basierendes System erfolgen.

Beim System zur berührungslosen Energieübertragung an ein Fahrzeug gemäss der DE102010012356 A1 sind neben einer Primärwicklung und einer Sekundärwicklung des Fahrzeugs zur Energieübertragung weiters Hilfswicklungen zur Detektion von Abweichungen zur optimalen Ausrichtung und/oder Positionierung des Fahrzeugs relativ zum Primärleiter vorgesehen. Diese Hilfswicklungen sind ausserhalb der Sekundärwicklung oder Primärwicklung angeordnet und erlauben die Detektierung des bei einer Fehlpositionierung durch die Hilfswicklungen durchtretenden magnetischen Flusses, insbesondere eines in verschiedenen Hilfswicklungen verschieden starken Flusses. Bei symmetrisch zur Hauptspule angeordneten Hilfswicklungen werden darin in der optimalen Lage gleich große Spannungen induziert.

In der DE102011015980 A1 ist ein Verfahren zum Positionieren eines Fahrzeuges in eine Position optimaler Kopplung zwischen einer Primärwicklung und einer Sekundärwicklung bei einem System zur berührungslosen Übertragung von Energie offenbart. Dazu ist im Bereich der Primärwicklung und am Fahrzeug jeweils eine zusätzliche Wicklungsanordnung angeordnet, wobei durch eine Kombination aus Aufbau der Wicklungs-anordnungen aus Teilwicklungen mit bestimmter Wicklungszahl, Fläche und relativer Orientierung in Verbindung mit Anlegen einer Wechselspannung an die erste Wicklung im Bereich der Primärwicklung vor Erreichen der optimalen Position des Fahrzeugs dieses in diejenige Richtung gesteuert wird, wo die Beträge der an den Teilwicklungen der zweiten Wicklung der am Fahrzeug angeordneten Wicklungsanordnung induzierten Spannungen maximal werden. Damit soll ein schnelles und zielgerichtetes Positionieren des Fahrzeugs ermöglicht sein und sogar schon während der Positionierung die Primär-wicklung mit Starkstrom bestrombar und somit das Fahrzeug während des Positionierens schon beladbar mit Energie sein.

Das System der Ladestation und jene des Fahrzeuges kommunizieren üblicherweise über drahtlose Verbindungen, beispielsweise per Funk, WLAN oder Bluetooth. Damit gelangen auch allenfalls vom System der Ladestation ermittelte Informationen über die relative Position der Energieübertragungsspulen zum Fahrzeug und werden dort über herkömmliche Schnittstellen, typischerweise einen CAN-Bus, an ein Display oder eine ähnliche Darstellungseinheit übergeben und dem Fahrer zugänglich gemacht.

Damit können Systeme als bekannt vorausgesetzt werden, die zumindest ein erstes Übertragerelement mit einer vorzugsweise ebenen ersten Spule und zumindest ein zweites Übertragerelement mit einer vorzugsweise ebenen zweiten Spule zum Zweck der Energieübertragung aufweisen. Typischerweise ist dabei der Umfang der ersten Spule grösser ist als jener der zweiten Spule. Um die Feldführung zu optimieren kann zumindest das erste Übertragerelement eine Abschirmung aus einem Material mit einer magnetischen Leitfähigkeit beziehungsweise Permeabilität von $\mu r \geq 4$, insbesondere aus Ferrit, für die erste Spule aufweisen. Diese Abschirmung umgibt die erste Spule zumindest teilweise, ist in Richtung auf die zweite Spule hin offen.

Für die Positionsbestimmung weist ein derartiges bekanntes System mehrere Messspulen auf, die mit einer Auswerteeinheit verbunden sind, in welcher in den Messspulen induzierte Ströme bzw. Spannungen ausgewertet und ein für den Abstand der Symmetriezentren von erster Spule und zweiter Spule bei im Wesentlichen paralleler Lage der Spulen charakteristisches Signal generiert wird. Ein solches System ist weiterhin aus der JP 5 635134 B2 bekannt.

Die Aufgabe der vorliegenden Erfindung war nun ein System zur gegenseitigen relativen Positionsbestimmung von zwei Übertragerelementen einer Anordnung zur induktiven Energieübertragung, das eine rasche, einfache, gegenüber herkömmlichen Systemen genauere und störungssichere Ermittlung der relativen gegenseitigen Position der Übertragerelemente gestattet. Das System soll einfach und mit möglichst geringer Anzahl an zusätzlichen, allein für die Positionsbestimmung genutzten Elementen aufgebaut sein.

Zur Lösung dieser Aufgabe ist ein oben beispielhaft beschriebenes System dadurch gekennzeichnet, dass am ersten Übertragerelement zumindest vier Messspulen aufgebracht sind, deren Achsen parallel zur Ebene der ersten Spule und vorzugsweise in der Ebene der Abschirmung liegen, wobei jeweils zwei Messspulen parallel und vorzugsweise koaxial zueinander und auf einander entgegengesetzten Seiten des Symmetriezentrums der ersten Spule liegen, wobei die Achsen einer Gruppe von parallelen Messspulen einen Winkel ungleich Null, vorzugsweise einen rechten Winkel, mit den Achsen der zweiten Gruppe von parallelen Messspulen einschliessen. Damit ist ein einfacher Aufbau des Systems gegeben, bei welchem über die aufgrund Ihrer Lage relativ zur Sendespule als Solenoid-Konfiguration wirkenden, einfach aufgebauten und wenig Material und Konstruktionsaufwand erfordernden Messspulen am gegenüberliegenden Übertragerelement kann bei einfachem Aufbau die genaue Position zwischen den Spulen bzw. den Übertragerelementen ermittelt werden.

Bevorzugt liegt zur noch weiteren Erhöhung der Positioniergenauigkeit zwischen den Messspulen zumindest einer Gruppe von parallelen Messspulen eine weitere parallele und vorzugsweise koaxiale Messspule. Die beste Detektierung der genau koaxialen Ausrichtung der Energieübertragungsspulen ist gegeben, wenn dabei die zusätzliche Messspule durch das Symmetriezentrum der ersten Spule verläuft und/oder wenn zwischen den Messspulen beider Gruppen von Messspulen jeweils eine zusätzliche Messspule angeordnet ist.

Weiters ist es bevorzugt, wenn das dem ersten Übertragerelement mit den Messspulen gegenüberliegende Übertragerelement mit der zweiten Spule zur Aussendung eines Mess-Magnetfeldes mittels dieser zweiten Spule ausgebildet ist. Damit kann eine ohnedies für die Energieübertragung notwendige Spule gleich als Sendespule für das Positionierungs-Magnetfeld mit Zirkularsystem genutzt und das System damit einfach, vom Aufbau wenig aufwändig und leicht gehalten werden.

Eine alternative oder auch ergänzende erfindungsgemässe Ausführungsform sieht vor, dass das dem ersten Übertragerelement mit den Messspulen gegenüberliegende Übertragerelement mit der zweiten Spule zur Aussendung eines Mess-Magnetfeldes mittels einer von der zweiten Spule unterschiedenen Sendeantenne ausgebildet ist. Diese Sendeantenne kann beispielsweise in Form einer Stabantenne oder einer Solenoid-Antenne ausgebildet sein. Gegebenenfalls wäre auch eine Spule um Ferritelemente des zweiten Übertragerelementes als Sendeantenne denkbar. Bei Anwendung auf Ladesysteme für elektrisch betriebene Fahrzeuge liege die Achse der separaten Antenne vorzugsweise in jeder Ausführungsform in Längsrichtung des Fahrzeuges.

Eine weitere Verbesserung der Positionierungsgenauigkeit wird bei dem erfindungsgemäßen System dadurch ermöglicht, dass die Auswerteeinheit sowohl zur Auswertung der Signalpegel als auch zur Ermittlung der Phaseninformation der Signale der Messspulen ausgelegt ist. Die Phaseninformation ist bedeutsam, um eine Unterscheidung zwischen den Bereichen auf gegenüberliegenden Seiten bezüglich des Symmetriezentrums der sendenden Spule mittels der Messspulen treffen zu können. Über vorzugsweise eine Zusatzschaltung der Auswerteeinheit wird die relative Phasenbeziehung der Signale der Messspulen ermittelt und dann im Nahbereich der beiden Übertragerelemente die wichtige Unterscheidung über vor bzw. hinter dem Symmetriezentrum bzw. links oder rechts davon getroffen werden.

Vorzugsweise ist der Durchmesser der ersten Spule grösser ist als der Durchmesser der zweiten Spule. Dies bietet auch die Möglichkeit, die Messspulen entsprechend gross auszuführen und damit eine hohe Messgenauigkeit zu erhalten.

Eine vorteilhafte Ausführungsform des erfindungsgemässen Systems sieht vor, dass die Messspulen ausserhalb eines Elektronikgehäuses des Übertragerelementes angeordnet sind. Dies ermöglicht die optimale Durchdringung durch das Mess-Magnetfeld. Vorzugsweise sind zumindest einige der Messspulen auf der Abschirmung angebracht, wobei deren ferromagnetisches Material den die Messspulen durchdringenden Anteil des Mess-Magnetfeldes verstärkt und damit einen erhöhten Signalpegel und bessere Positionierungsgenauigkeit bei grösserem Abstand der Übertragerelemente gewährleistet.

Die eingangs gestellte Aufgabe wir auch gelöst durch ein Verfahren zur Bestimmung der relativen Position zweier Übertragerelemente zur induktiven Energieübertragung unter Verwendung eines Positionsbestimmungssystems gemäss einem der obigen Absätze.

Ein derartiges Verfahren umfasst die Erzeugung eines Mess-Magnetfeldes durch eines der Übertragerelemente und Auswertung von in Messspulen des anderen Übertragerelementes induzierte Ströme bzw. Spannungen zur Generierung eines für den Abstand der Symmetriezentren der Spulen der Übertragerelemente charakteristischen Signals.

Dabei wird die Spule eines Übertragerelementes zur Erzeugung des Mess-Magnetfeldes angeregt, und werden in der Auswerteeinheit des anderen Übertragerelementes die Signalpegel der Messspulen ausgewertet. Dazu werden insbesondere die relative Höhen der Signalpegel verglichen. Mit einem System mit einfachem Aufbau kann durch diese Vorgangsweise die genaue Position zwischen den Spulen bzw. den Übertragerelementen ermittelt werden.

Bevorzugt werden dabei der Signalpegel der zentralen Messspule und die Differenz der Signalpegel der äussersten Messspulen gebildet und in Beziehung gesetzt, wodurch sich eine sehr genaue Ermittlung der Übereinstimmung der Symmetriezentren der Messspulen mit dem Symmetriezentrum der das Mess-Magnetfeld aussendenden Spule bewerkstelligen lässt. Das erfindungsgemäße Verfahren sieht weiters vor, dass in der Auswerteeinheit die relative Phasenlage der Signale zwischen jeweils zwei Messspulen innerhalb einer Gruppe von parallelen Messspulen ausgewertet wird. Mittels dieser ergänzenden Vorgangsweise können jene Bereiche unterschieden werden, die in Bezug auf das Symmetriezentrum der das Mess-Magnetfeld aussendenden Spule auf einander gegenüberliegenden Seiten liegen.

Besonders bevorzugt ist jene Variante des Verfahrens, bei welchem die Signalpegel der zentralen Messspule und die Differenz der Signalpegel der äussersten Messspulen zusammen mit der jeweiligen Phasenlage dieser Signale in Beziehung gesetzt und daraus für jede Relativposition der Symmetriezentren der Spulen ein eindeutiger Wert bestimmt wird. Damit ist die höchste Genauigkeit der Positionsbestimmung gegeben, wobei in jeder beliebigen Relativposition auch die relative Lage der Messspulen-Anordnung vor oder hinter dem Symmetriezentrum der das Mess-Magnetfeld aussendenden Spule bekannt ist.

Besonders vorteilhaft kommen die oben erläuterten Merkmale zur Anwendung bei einem System zur induktiven Energieübertragung, insbesondere zum Laden von elektrisch antreibbaren Fahrzeugen, mit wenigstens zwei Übertragerelementen. Wenn dieses System ein Positionsbestimmungssystem gemäss einem der oben erläuterten Absätze aufweist, und das erste Übertragerelement als Primärteil zur Generierung eines Magnetfeldes und das zweite Übertragerelement als Sekundärteil am Fahrzeug zur Aufnahme der Energie über das Magnetfeld, ausgebildet sind, kann beim Überfahren und Einparken des Fahrzeuges an der Ladeposition eine rasche und sehr genaue Positionsbestimmung gewährleistet werden.

Bevorzugt ist dabei die Auswerteeinheit des als Primärteil wirkenden ersten Übertragerelementes zur Durchführung eines Verfahrens gemäss einem der obigen Absätze ausgeführt. Insbesondere bei Einbeziehung der Phaseninformation ist dabei ein Überfahren und Einparken in einem Zug möglich, da die Berücksichtigung der Phaseninformation wie oben erläutert zusätzlich zur Bestimmung der Entfernung der Symmetriezentren der Spulen von Sende- und Empfangsteil auch die exakte Bestimmung der Halbebene bzw. Quadranten (bei z.B. orthogonalen Messspulen) ermöglicht und ein Erreichen der und dann wieder Entfernen von der genau koaxialen Position damit vermieden werden kann.

Eine weitere vorteilhafte Ausführungsform des erfindungsgemässen induktiven Ladesystems für Fahrzeuge ist dadurch gekennzeichnet, dass die Auswerteeinheit ausgelegt ist, um die Inbetriebnahme des als Primärteil wirkenden ersten Übertragerelementes zu unterbinden und erst freizugeben, wenn das Positionsbestimmungssystem das Unterschreiten eines vordefinierten Abstandes zwischen den Spulen der Übertragerelemente ermittelt hat. Mit dieser Funktion der Freigabe der Ladeoperation wird auch die betriebliche Sicherheit erhöht, da bei falscher Positionierung anstelle des Fahrzeuges andere Objekte aufgeheizt und allenfalls entzündet werden könnten.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben. Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:

Fig. 1 in schematischer Darstellung zwei Übertragerelemente S, R eines Systems zur induktiven Energieübertragung zwischen zumindest zwei Übertragerelementen in gegeneinander versetzter und in genau koaxialer Position,

Fig. 2 Diagramme der Messwerte der Messspulen in Abhängigkeit vom seitlichen Versatz zwischen den Symmetriezentren der Spulen der Übertragerelemente,

Fig. 3 Diagramme der rückberechneten Analogwerte für die Spannung, korrespondierend zu den Diagrammen der Fig. 2,

Fig. 4 ein Diagramm der Ortskurven zweier Positionierungs-Signale,

Fig. 5 ein Diagramm der Spannungszeigerlänge in Abhängigkeit vom seitlichen Versatz zwischen den Symmetriezentren der Spulen der Übertragerelemente,

Fig. 6 nochmals ein Diagramm der Ortskurven entsprechend Fig. 4 unter Berücksichtigung der Informationen über die Spannungszeigerlänge,

Fig. 7 den Spannungszeigerwinkel in Abhängigkeit vom seitlichen Versatz zwischen den Symmetriezentren der Spulen der Übertragerelemente, und

Fig. 8 eine erfindungsgemässe Ausführungsform mit einer zusätzlichen externen Antenne.

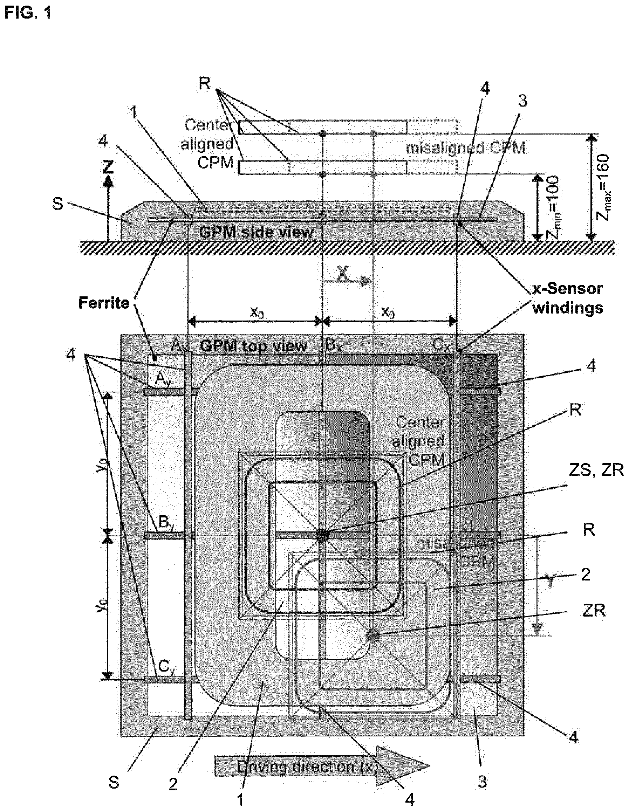

In Fig. 1 sind in schematischer Darstellung zwei Übertragerelemente S, R eines Systems zur induktiven Energieübertragung zwischen zumindest zwei Übertragerelementen in gegeneinander versetzter und in genau koaxialer Position zu erkennen. Eines der Übertragerelemente S ist dem Primärteil des Energieübertragungssystems zuzuordnen und ist beispielsweise bei induktiven Ladeanordnungen für zumindest teilweise elektrisch betriebene Fahrzeuge am oder im Boden im Bereich einer Ladestation, einer Garage für das Fahrzeug, etc. positioniert. Wenn sich ein Fahrzeug in der Ladeposition befindet, sollte die Primärspule 1 des ersten Übertragerelementes S genau koaxial unterhalb der typischerweise kleineren Sekundärspule 2 des zweiten, empfangenden Übertragerelementes R liegen, welches am zu ladenden Fahrzeug montiert und zur Einspeisung der vom Übertragerelement S drahtlos empfangenen Energie mit dessen Traktionsbatterie verbunden ist. Die Energie zur Ladung der Batterien des Fahrzeugs wird dabei magnetisch-induktiv vom ersten Übertragerelement S auf das zweite Übertragerelement R übertragen, wobei diese Übertragung umso effektiver ist, je genauer die Spulen 1, 2 übereinander positioniert sind. Um dies zu gewährleisten ist das Energieübertragungssystem mit einem Positionierungssystem ausgestattet oder verbunden, welches das Einnehmen einer Position mit optimaler Ausrichtung der Spulen 1, 2 zueinander zur Erzielung der optimalen Kopplung der Spulen 1, 2 erleichtern oder gar selbsttätig bewerkstelligen soll.

Voraussetzung für eine derartige Positionierungshilfe, wie immer auch die relative Position der Spulen 1, 2 zueinander angezeigt, signalisiert oder allenfalls zur automatischen Steuerung des Fahrzeugs in die Ladeposition ausgewertet wird, ist die Bestimmung der Position der Sekundärspule 2 über dem Zentrum der Primärspule 1, wofür hier ein induktives Verfahren vorgeschlagen wird, welches Teile des für das Ladesystem ohnedies vorhandenen Magnetkreises nutzt. Dazu wird beim Positionierungsvorgang die Sekundärwicklung 2 mit einer Frequenz von ca. 130kHz angeregt und wirkt damit als Sendespule am zweiten Übertragerelement R für das Positionierungssystem.

Das erste Übertragerelement S, welches die Primärspule 1 beinhaltet, ist hingegen vorzugsweise mit insgesamt 6 "Solenoid-Wicklungen" als Messspulen 4 ausgerüstet. Diese sind vorteilhafterweise um Ferrit-Bauteile des ersten Übertragerelements S angelegt, insbesondere um eine Ferrit-Abschirmung 3 der elektronischen Bauteil des Primärteils gegen die Primärspule 1. Für ein genaue Positionsbestimmung sind je 3 in orthogonalen Richtungen (hier x- und y-Richtung bezeichnet) orientiert und mit definiertem Abstand $x_0$ und $y_0$ symmetrisch zum Symmetriezentrum ZS der Spule 1 angeordnet. Das von der Sekundärwicklung 2 erzeugte Feld bewirkt je nach Position verschiedene Spannungen durch die einzelnen Wicklungen 4. Wie nachfolgend beschrieben wird, kann durch eine entsprechend ausgelegte Elektronik der Auswerteeinheit 5 aus diesen Spannungen zuverlässig die X/Y-Position beispielsweise des zweiten, am Fahrzeug montierten Übertragerelementes R gegenüber dem ersten Übertragerelement S am Boden unterhalb des Fahrzeugs bestimmt werden, und zwar unabhängig von der Höhe Z, d.h. dem vertikalen Abstand der Spulen 1, 2 senkrecht zu deren Ebenen. Das System der Ladestation oder eines anderen Primärteils kommuniziert üblicherweise über drahtlose Verbindungen, beispielsweise per Funk, WLAN oder Bluetooth, mit dem System des Fahrzeuges. Damit können auch die in der Auswerteeinheit 5 ermittelten Informationen über die relative Position der Energieübertragungsspulen 1, 2 zum Fahrzeug übermittelt und dort über herkömmliche Schnittstellen, typischerweise einen CAN-Bus, an ein Display oder eine ähnliche Darstellungseinheit übergeben und dem Fahrer zugänglich gemacht werden.

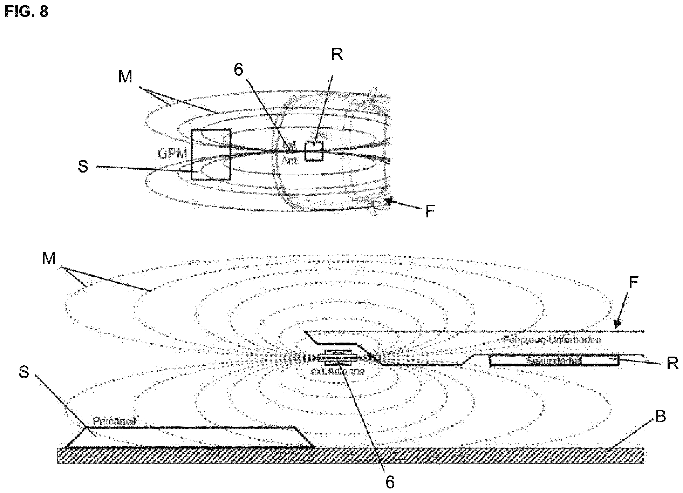

Das Messmagnetfeld M könnte, wie in Fig. 8 dargestellt ist, anstelle durch die Sekundärwicklung 2 des vorzugsweise am Fahrzeug F angebrachten zweiten Übertragerelementes R durch eine separate Sendeantenne 6 erzeugt werden. Diese separate Antenne 6 könnte auch auch als Ergänzung zu einem selbst ein Mess-Magnetfeld M erzeugenden Übertragerelement R vorgesehen und in dieses Übertragerelement R integriert sein. Diese Sendeantenne 6 kann beispielsweise in Form einer Stabantenne oder auch als Solenoid-Antenne ausgebildet sein und kann allenfalls auch ausserhalb des Übertragerelementes R als externe Sendeantenne 6 am Fahrzeug angebracht sein, wie in Fig. 8 beispielhaft dargestellt ist. Gegebenenfalls wäre auch eine Spule um Ferritelemente des zweiten Übertragerelementes R als Sendeantenne denkbar. Bei Anwendung auf Ladesysteme für elektrisch betriebene Fahrzeuge F (dessen vorderer Abschnitt im oberen Teil der Fig. 8 schematisch dargestellt ist, bzw. dessen Fahrzeugboden stellvertretend im unteren Teil der Fig. 8 abgebildet ist) liegt die Achse der separaten Antenne 6 vorzugsweise in jeder Ausführungsform in bzw. zumindest parallel zur Längsrichtung des Fahrzeuges F. Zu sehen sind in Fig. 8 auch noch das Übertragerelement S für die Aussendung des Magnetfeldes für die Energieübertragung zum Fahrzeug F hin, welches typischerweise am Boden B eines Ladebereiches angeordnet ist, beispielsweise an einer Ladestation oder einer Garage für das Fahrzeug F.

Als erster Schritt im Verfahren zur Positionsbestimmung mit Hilfe der erfindungsgemässen Anordnung werden mittels zumindest einer mit den Messspulen 4 verbundenen Spannungsmessanordnung, welche in die Auswerteeinheit 5 integriert sein oder dieser vorgeschaltet sein kann, die an den Wicklungen 4A, 4B und 4C auftretenden Spannungen in Abhängigkeit von der Position, genauer gesagt in Abhängigkeit vom seitlichen Versatz zwischen den Symmetriezentren ZS und ZR der Spulen 1, 2 der Übertragerelemente S, R ermittelt. Das Messmagnetfeld M kann dabei durch eine allenfalls vorgesehene externe Antenne 6 ausgesendet werden, vorteilhafterweise bei grosser Entfernung der beiden Übertragerelemente S, R zueinander. Bei kleiner werdenden Entfernungen wird dann vorteilhafterweise, auch bei vorhandener externer Antenne 6 am Fahrzeug F, die Positionsbestimmung mit Hilfe eines Mess-Magnetfeldes fortgeführt, welches durch eines der Übertragerelemente S, R, insbesondere des Übertragerelementes R am Fahrzeug, durchgeführt bzw. fortgesetzt.

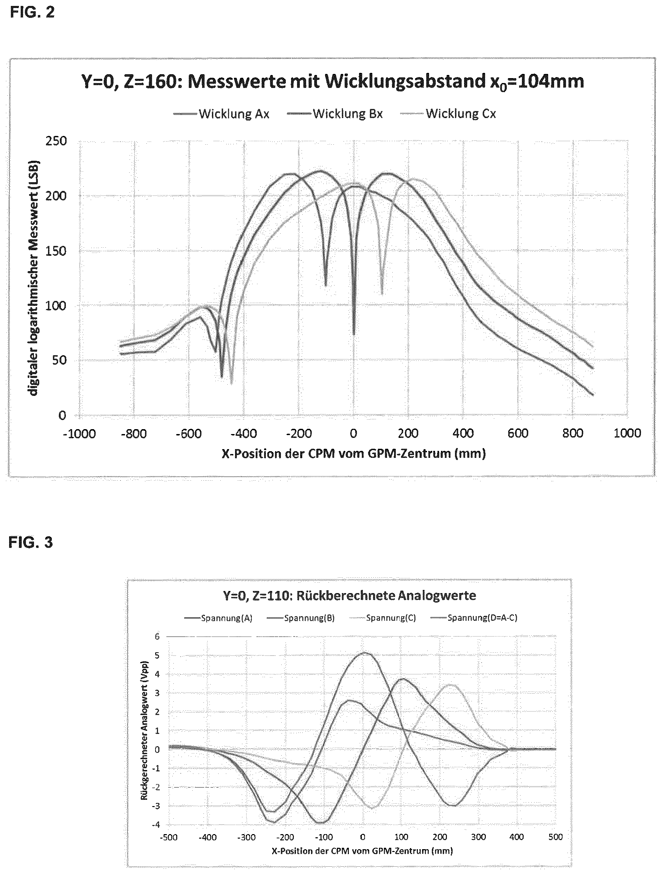

Im Diagramm der Fig. 2 sind diese Spannungswerte für zwei verschiedene vertikale Z-Abständen eingetragen. Die Messwerte wurden dabei mit einem logarithmischen Verstärker "komprimiert" und als 8-bit-Wert ausgegeben. Die folgenden Erläuterungen beschränken sich der Einfachheit halber auf die Messung in lediglich einer der orthogonalen Richtungen der Messspulen 4, nämlich der X-Richtung, mit Y=0. Das originale Signal an der Spule 4 weist mehrere Nullstellen auf, welche mit einem Phasensprung des Signals einhergehen. Von diesem Signal wird vorzugsweise in der Auswerteeinheit 5 der Betrag gebildet, dieser dann logarithmiert und der Wert mit 8 Bit digitalisiert. Dieser 8-Bit-Wert ist das in Fig. 2 dargestellte "Messsignal". Dieses Signal enthält keine Phaseninformation. Letztere ist aber entscheidend, um z.B. herauszufinden, ob die Position des zweiten Übertragerelementes R "links oder rechts" bzw. "vor oder hinter" dem Symmetriezentrum ZS des ersten Übertragerelementes S liegt. Daher ist in die Auswerteeinheit 5 eine Zusatzschaltung oder ein entsprechendes Softwaremodul integriert, welches zur Ermittlung der Phaseninformation ausgelegt ist. Dabei wird die relative Phasenbeziehung der drei Signale untereinander bestimmt. Zum besseren Verständnis sind im Folgenden die Phasen der drei Signale mit absoluten Vorzeichen so dargestellt, dass der Haupt-Nulldurchgang von links unten nach rechts oben erfolgt. In Fig. 3 ist der Verlauf in der gleichen Skalierung einmal für einen vertikalen Abstand Z der Spulen von 110mm und einmal für 160mm dargestellt. Zusätzlich ist im Diagramm der Fig. 3 noch die Differenz der "äusseren" Signale D=A-C aufgetragen.

Aus der Fig. 3 ist unter anderem zu erkennen, dass die Signalpegel für z=110 etwa doppelt so hoch wie für z=160, der Kurvenverlauf im Bereich -300mm < x <300mm für beide Abstände aber ähnlich aussieht. Bei seitlichem Versatz der Spulen 1, 2 zueinander von mehr als 300mm hängt der Verlauf stark vom vertikalen Abstand ab. Bei kleinem Abstand klingen die Signale viel stärker ab.

Durch Messung des Signalpegel der Messspulen 4 und der Auswertung der gegenseitigen Phasenlage in der Auswerteeinheit 5 der vier Signale A,B,C,D lassen sich Rückschlüsse über den Positionsbereich ziehen, wie in der folgenden Tabelle angegeben:

| Bereich | Xmin (mm) | Xmax (mm) | Phasenbedingung | Signalpegel-Bedingung | Vorz. B | Vorz. D |
|---------|-----------|-----------|-----------------|-----------------------|---------|---------|
| I | $\approx$-400 | $\approx$-170 | Alle Phasen gleich | $|A|>|B|>|C|$ | negativ | negativ |
| II | $\approx$-170 | $\approx$-130 | Alle Phasen gleich | $|B|>|A|>|C|$ | negativ? | negativ? |
| III | $\approx$-130 | -104 | Phase (D) $\neq$ Phasen A,B, C | $|A|<|C|$ | negativ | positiv |
| IV | -104 | 0 | Phase A $\neq$ Phasen B,C | keine | negativ | positiv |
| V | 0 | 104 | Phasen A,B $\neq$ Phase C | keine | positiv | positiv |
| VI | 104 | $\approx$-130 | Alle Phasen gleich | $|B|>|A|>|C|$ | positiv? | positiv? |
| VII | $\approx$-130 | $\approx$-170 | Phase (D) $\neq$ Phasen A,B, C | $|B|>|C|>|A|$ | positiv | negativ |
| VIII | $\approx$-130 | $\approx$-400 | Phase (D) # Phasen A,B, C | $|C|>|B|>|A|$ | positiv | negativ |

Für die weitere Genauigkeitssteigerung der Positionsbestimmung wird das oben erläuterte Verfahren weiter verfeinert wie nachfolgend beschrieben:

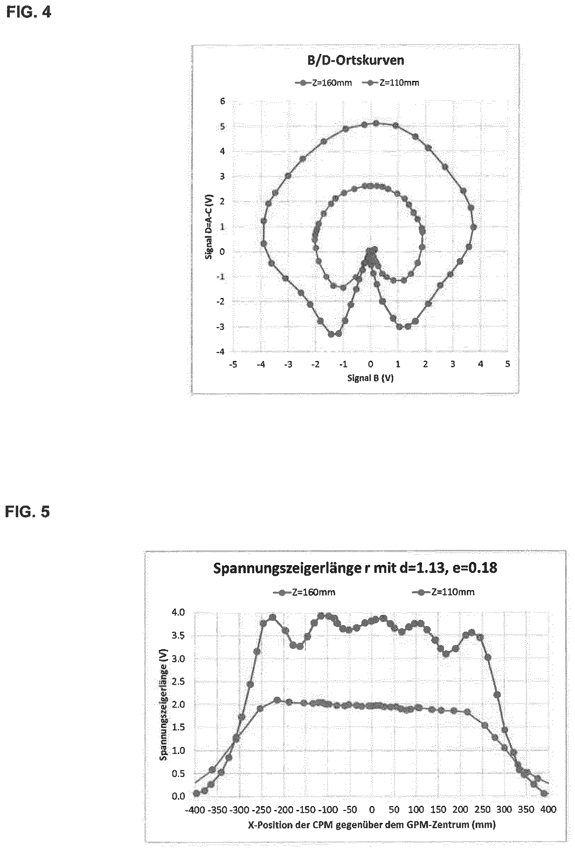

Dazu werden die Signale B (das Signal der mittleren Messspule 4) und D (Differenz der Signale der beiden äusseren Messspulen 4) in der Auswerteeinheit 5 weiter verarbeitet. Diese ist dazu so ausgelegt, dass diese beiden genannten Signalwerte mit ihrer Phasenlage für jeden Punkt als Koordinaten in einem zweidimensionalen Koordinatensystem aufgetragen und die Punkte in der Reihenfolge ihrer Position miteinander verbunden werden. Die Fig. 4 stellt ein Diagramm mit derartigen Ortskurven für die auch bislang schon betrachteten Abstände Z=110mm und Z=160mm dar.

Der Verlauf der Ortskurven ist in einem weiten Bereich nahezu kreis- bzw. ellipsenförmig, wobei ein kleinerer z-Abstand mit einem grösseren Kreisradius einhergeht. Der Kreismittelpunkt ist gegenüber dem Nullpunkt in D-Richtung verschoben, wobei die Verschiebung des Kreismittelpunktes vom Nullpunkt proportional zum mittleren Kreisradius ist. Durch die in der Auswerteeinheit 5 weiters implementierte Berechnung des Winkel eines sogenannten "Spannungszeigers" (als Verbindungslinie zwischen Messpunkt und Kreismittelpunkt) gegenüber der D-Achse, ergibt einen vom Signalpegel unabhängigen Wert, der eindeutig einer bestimmten Position, d.h. einem bestimmten Abstand zwischen den Symmetriezentren ZS und ZR der Spulen 1, 2, entspricht.

Um diesen Winkel zu bestimmen, wird folgendes Verfahren angewendet. Erst wird die Position des Nullpunktes aus den Messwerten B und D berechnet. Dazu wird folgendes vorausgesetzt:

Der Verlauf wird durch eine Ellipse mit Achse r in B-richtung und d·r in D-Richtung angenähert, wobei d als bekannt vorausgesetzt wird. Der Mittelpunkt der Ellipse ist um die Exzentrität e in positive D-Richtung verschoben, wobei e als fixer und bekannter Anteil der D-Achse der Ellipse definiert ist. Eine Verschiebung des Kreises in B-Richtung würde zwar die globale Genauigkeit erhöhen, aber im wichtigsten Bereich um B=0 vermindern; sie wird daher nicht berücksichtigt.

$$\frac{B^2}{r^2} + \left(\frac{D}{r \cdot d} - e\right)^2 = 1$$

Damit ergibt sich die zugehörige Ellipsengleichung:

$$B^2 + \left(\frac{D}{d} - e \cdot r\right)^2 = r^2$$

Diese Gleichung soll nach r aufgelöst werden:

$$\left(1 - e^2\right) \cdot r^2 + \frac{2D \cdot e}{d} \cdot r - B^2 - \frac{D^2}{d^2} = 0$$

$$r = \sqrt{B^2 + \frac{D^2}{d^2}}$$

Für e=0 lautet die Lösung:

Für e≠0 muss die quadratische Gleichung nach r aufgelöst werden:

$$r = \frac{-\frac{2D \cdot e}{d} \pm \sqrt{\frac{4D^2 e^2}{d^2} + 4\left(1 - e^2\right) \cdot \left(\frac{D^2}{d^2} + B^2\right)}}{2\left(1 - e^2\right)}$$

$$r = \frac{\sqrt{\frac{D^2}{d^2} + B^2 \cdot \left(1 - e^2\right)} - \frac{D}{d} \cdot e}{\left(1 - e^2\right)}$$

Die negative Lösung macht keinen Sinn, daher gilt:

Der Messwert |D| wird in den Bereichen I, II, VII und VIII mit negativem Vorzeichen versehen.

Die Parameter d und e sind anhand einer Mustermessung so zu bestimmen, dass r über einen weiten Bereich möglichst unabhängig von B und D bzw. von der Position ist:

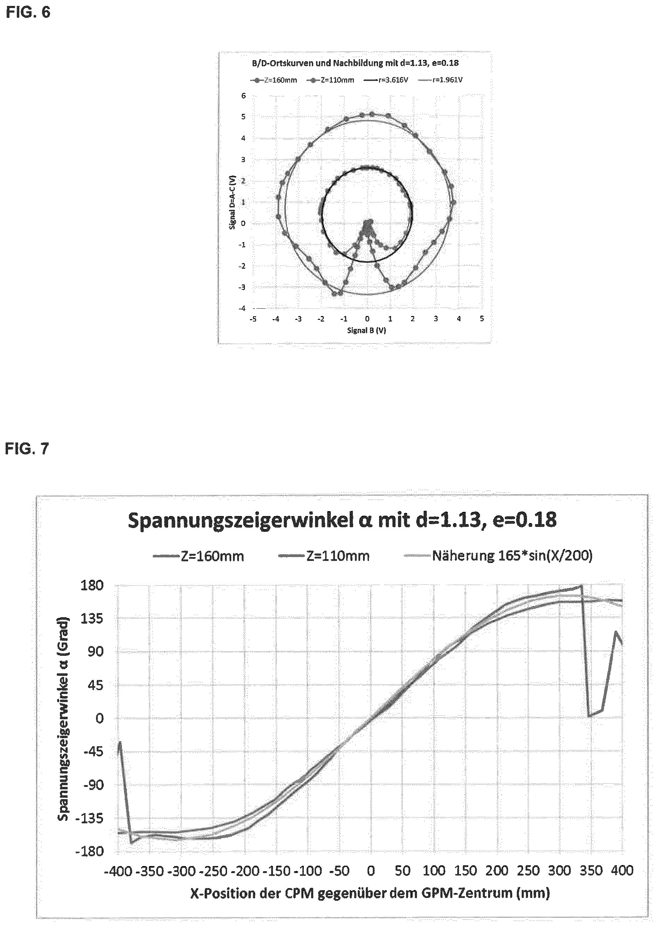

Aus der Fig. 5, in welcher das Ergebnis dieser Auswertungen diagrammartig dargestellt ist, ist ersichtlich, dass mit d=1.13, e=0.18 insbesondere für z=160mm die Spannungszeigerlänge r im Bereich -200mm...200mm nur geringfügig um einen praktisch konstanten Wert variiert. Werden die über den Bereich -200...200mm gemittelte Spannungszeigerlänge sowie die obigen Parameterwerte für d und e in die Ellipsengleichung eingesetzt, so sind die sich ergebenden Ellipsen in weiten Bereichen deckungsgleich mit den Messwerten, wie in Fig. 6 zu sehen ist.

In weitere Folge kalkuliert die Auswerteeinheit den "Winkel" a des "Spannungszeigers" gegenüber der vertikalen D-Achse über eine Berechnung aus der zu einer Kreisgleichung "entzerrten" Ellipsengleichung:

$$\tan\alpha = \frac{\sin\alpha}{\cos\alpha} = \frac{\dfrac{B}{r}}{\dfrac{D}{r\cdot d} - e} \quad \Rightarrow \quad \alpha = \arctan\frac{B}{\dfrac{D}{d} - e\cdot r}$$

Wie bereits in der obigen Tabelle wird der Messwert |D| in den Bereichen I, II, VII und VIII mit negativem Vorzeichen versehen, zudem wird B negativ in den Bereichen I,II,III, und IV. Da die Tangensfunktion eine Periodizität von 180° aufweist, der gesuchte Winkel aber Werte bis +/-150° einnehmen kann, wird die Rechnung wie folgt durchgeführt, und führt zur Darstellung des Spannungszeigers wie er im Diagramm der Fig. 7 eingetragen ist.
Für

$$\left|B\right| < \left|\frac{D}{d} - e\cdot r\right| : \qquad\qquad \alpha = \arctan\frac{B}{\dfrac{D}{d} - e\cdot r}$$

in den Bereichen V, VI

$$\alpha = \Pi - \arctan\frac{B}{\dfrac{D}{d} - e\cdot r}$$

im Bereich VIII

$$\alpha = -\Pi - \arctan\frac{B}{\dfrac{D}{d} - e\cdot r}$$

im Bereich I
Für

$$\left|B\right| \geq \left|\frac{D}{d} - e\cdot r\right|$$

$$\alpha = \frac{\Pi}{2} - \arctan\frac{\dfrac{D}{d} - e\cdot r}{B}$$

Bereiche V... VIII

$$\alpha = -\frac{\Pi}{2} - \arctan\frac{\dfrac{D}{d} - e\cdot r}{B}$$

Bereiche I...IV

Das erfindungsgemässe Positioniersystem kann auch mit Systemen zur Fremdkörpererkennung (FOD) bzw. Erkennung von lebenden Objekten (LOD) gekoppelt werden. So könnte beispielsweise die Auswerteeinheit des Positioniersystems derart ausgelegt sein, dass sie die Inbetriebnahme des als Primärteil wirkenden ersten Übertragerelementes solange unterbindet, bis ein bestimmter Relativabstand der beiden Übertragerelemente unterschritten ist. Konkret wird die Energieübertragung erst freizugeben, wenn das Positionsbestimmungssystem das Unterschreiten eines vordefinierten Abstandes zwischen den Spulen der Übertragerelemente ermittelt hat. Bei falscher Positionierung könnten sonst anstelle einer Energieübertragung auf das Fahrzeug andere Objekte unbeabsichtigt aufgeheizt und allenfalls entzündet werden.

In der bisherigen Beschreibung wurde die Erfindung mit am ersten Übertragerelement S vorgesehenen Messspulen 4 erläutert, welches Übertragerelement S als Primärteil des induktiven Energieübertragungssystems fungiert. Dieses Übertragerelement S oder zumindest dessen Spule 1 sind üblicherweise am Boden des Ladebereiches angeordnet, sei es in einer öffentlichen Ladestation oder in einer Garage eines privaten Nutzers. Natürlich ist aber auch die Umkehrung der Funktion möglich, indem die Messspulen 4 an jenem Übertragerelement R angebracht sind, das die induktiv übertragene Energie vom Primärteil des Systems aufnimmt und das typischerweise als Sekundärteil am Fahrzeug angebracht ist. In diesem Fall kann die Auswerteeinheit 5 für die Positionsbestimmung direkt und auch drahtgebunden mit einer Anzeigeeinheit im Fahrzeug verbunden sein.

**Liste der Bezugszeichen**

1      erste (Sende)Spule
2      zweite (Empfangs)Spule
3      Abschirmung
4      Messspulen
5      Auswerteeinheit
6      externe Antenne
M     Feldlinien der externen Antenne
S      erstes Übertragerelement
R      zweites Übertragerelement
F      Fahrzeug
B      Boden
ZS     Symmetriezentrum der ersten Spule
ZR     Symmetriezentrum der zweiten Spule

**Patentansprüche**

1. System zur gegenseitigen relativen Positionsbestimmung von zwei Übertragerelementen einer Anordnung zur induktiven Energieübertragung, umfassend zumindest ein erstes Übertragerelement (S) mit einer vorzugsweise ebenen ersten Spule (1) und zumindest ein zweites Übertragerelement (R) mit einer vorzugsweise ebenen zweiten Spule (2), wobei der Umfang der ersten Spule (1) vorzugsweise grösser ist als jener der zweiten Spule (2), wobei zumindest das erste Übertragerelement (S) eine Abschirmung (3) aus einem Material mit einer magnetischen Leitfähigkeit beziehungsweise Permeabilität von $\mu_r \geq 4$, insbesondere aus Ferrit, für die erste Spule (1) aufweist, welche Abschirmung (3) die erste Spule (1) zumindest teilweise umgibt, in Richtung auf die zweite Spule (2) hin offen ist, sowie umfassend mehrere Messspulen (4), die mit einer Auswerteeinheit (5) verbunden sind, in welcher in den Messspulen (4) von einem erzeugten Mess-Magnetfeldes (M) induzierte Ströme bzw. Spannungen ausgewertet und ein für den Abstand der Symmetriezentren (ZS, ZR) von erster Spule (1) und zweiter Spule (2) bei im Wesentlichen paralleler Lage der Spulen (1, 2) charakteristisches Signal generiert wird,
**dadurch gekennzeichnet, dass**
am ersten Übertragerelement (S) zumindest vier Messspulen (4) aufgebracht sind, deren Achsen parallel zur Ebene der ersten Spule (1) und vorzugsweise in der Ebene der Abschirmung (3) liegen, wobei jeweils zwei Messspulen (4) parallel und vorzugsweise koaxial zueinander und auf einander entgegengesetzten Seiten des Symmetriezentrums (ZS) der ersten Spule (1) liegen, wobei die Achsen einer Gruppe von parallelen Messspulen (4) einen Winkel ungleich Null, vorzugsweise einen rechten Winkel, mit den Achsen der zweiten Gruppe von parallelen Messspulen (4) einschliessen;
die Auswerteeinheit (5) sowohl zur Auswertung der Signalpegel als auch zur Ermittlung der Phaseninformation der Signale der Messspulen (4) ausgelegt ist; und
die Auswerteeinheit (5) eingerichtet ist, die relative Phasenlage der Signale zwischen jeweils zwei Messspulen (4) innerhalb einer Gruppe von parallelen Messspulen (4) auszuwerten.

2. System nach Anspruch 1, **dadurch gekennzeichnet, dass** zwischen den Messspulen (4) zumindest einer Gruppe von parallelen Messspulen, vorzugsweise zwischen den Messspulen (4) beider Gruppen von Messspulen, jeweils eine weitere parallele und vorzugsweise koaxiale Messspule (4) liegt, die vorzugsweise durch das Symmetriezentrum (ZS) der ersten Spule (1) verläuft.

3. System nach Anspruch 1 oder 2, **dadurch gekennzeichnet, dass** das Übertragerelement (R) mit der zweiten Spule (2) dem ersten Übertragerelement (S) mit den Messspulen (4) gegenüberliegt und zur Aussendung des Mess-Magnetfeldes (M) mittels dieser zweiten Spule (2) ausgebildet ist.

4. System nach Anspruch 3, **dadurch gekennzeichnet, dass** das dem ersten Übertragerelement (S) mit den Messspulen (4) gegenüberliegende Übertragerelement (R) mit der zweiten Spule (2) zur Aussendung des Mess-Magnetfeldes (M) mittels einer von der zweiten Spule (2) unterschiedenen Sendeantenne (6) ausgebildet ist.

5. System nach einem der Ansprüche 1 bis 4, **dadurch gekennzeichnet, dass** der Durchmesser der ersten Spule (1) grösser ist als der Durchmesser der zweiten Spule (2).

6. System nach einem der Ansprüche 1 bis 5, **dadurch gekennzeichnet, dass** das erste Übertragungselement (S) in einem Elektronikgehäuse angeordnet ist und, dass die Messspulen (4) ausserhalb des Elektronikgehäuses des ersten Übertragerelementes (S) angeordnet sind, wobei vorzugsweise zumindest einige der Messspulen (4) auf der Abschirmung (3) angebracht sind.

7. Verfahren zur Bestimmung der relativen Position zweier Übertragerelemente (S, R) zur induktiven Energieübertragung unter Verwendung eines Positionsbestimmungssystems gemäss einem der Ansprüche 1 bis 6, umfassend die Erzeugung eines Mess-Magnetfeldes (M) in einem der Übertragerelemente (S, R) und Auswertung der von dem Mess-Magnetfeldes (M) in Messspulen (4) des anderen Übertragerelementes (S, R) induzierten Ströme bzw. Spannungen zur Generierung eines für den Abstand der Symmetriezentren (ZS, ZR) der Spulen (1, 2) der Übertragerelemente (S, R) charakteristischen Signals, **dadurch gekennzeichnet, dass**
am ersten Übertragerelement (S) zumindest vier Messspulen (4) aufgebracht sind, deren Achsen parallel zur Ebene der ersten Spule (1) und vorzugsweise in der Ebene der Abschirmung (3) liegen, wobei jeweils zwei Messspulen (4) parallel und vorzugsweise koaxial zueinander und auf einander entgegengesetzten Seiten des Symmetriezentrums (ZS) der ersten Spule (1) liegen, wobei die Achsen einer Gruppe von parallelen Messspulen (4) einen Winkel ungleich Null, vorzugsweise einen rechten Winkel, mit den Achsen der zweiten Gruppe von parallelen Messspulen (4) einschliessen,
die Auswerteeinheit (5) sowohl zur Auswertung der Signalpegel als auch zur Ermittlung der Phaseninformation der Signale der Messspulen (4) ausgelegt ist;
in der Auswerteeinheit (5) die relative Phasenlage der Signale zwischen jeweils zwei Messspulen (4) innerhalb einer Gruppe von parallelen Messspulen (4) ausgewertet wird.

8. Verfahren nach Anspruch 7, **dadurch gekennzeichnet, dass** die Spule (2) eines Übertragerelementes (R) zur Erzeugung des Mess-Magnetfeldes (M) angeregt wird, und dass in der Auswerteeinheit (5) des anderen Übertragerelementes (S) die Signalpegel der Messspulen (4) ausgewertet werden, wobei vorzugsweise die relative Höhe der Signalpegel verglichen wird.

9. Verfahren nach Anspruch 8, **dadurch gekennzeichnet, dass** zwischen den Messspulen (4) zumindest einer Gruppe von parallelen Messspulen, vorzugsweise zwischen den Messspulen (4) beider Gruppen von Messspulen, jeweils eine weitere parallele und vorzugsweise koaxiale Messspule (4) liegt, die vorzugsweise durch das Symmetriezentrum (ZS) der ersten Spule (1) verläuft, und, dass der Signalpegel der weiteren Messspule (4) und die Differenz (D) der Signalpegel der äussersten Messspulen (4) gebildet und in Beziehung gesetzt werden.

10. Verfahren nach einem der Ansprüche 7 bis 9, **dadurch gekennzeichnet, dass** die Signalpegel der weiteren Messspule (4) und die Differenz (D) der Signalpegel der äussersten Messspulen (4) zusammen mit der jeweiligen Phasenlage dieser Signale in Beziehung gesetzt und daraus für jede Relativposition der Symmetriezentren (ZS, ZR) der Spulen (1, 2) ein eindeutiger Wert bestimmt wird.

11. System zur induktiven Energieübertragung, insbesondere zum Laden von elektrisch antreibbaren Fahrzeugen, mit wenigstens zwei Übertragerelementen und einem Positionsbestimmungssystem gemäss einem der Ansprüche 1 bis 6, **dadurch gekennzeichnet, dass** das erste Übertragerelement (S) als Primärteil zur Generierung eines Magnetfeldes und das zweite Übertragerelement (R) als Sekundärteil am Fahrzeug zur Aufnahme der Energie über das Magnetfeld, ausgebildet sind.

12. System nach Anspruch 11, **dadurch gekennzeichnet, dass** die Auswerteeinheit (5) des als Primärteil wirkenden ersten Übertragerelementes (S) zur Durchführung eines Verfahrens gemäss einem der Ansprüche 7 bis 10 ausgeführt ist.

13. System nach Anspruch 12, **dadurch gekennzeichnet, dass** die Auswerteeinheit (5) ausgelegt ist, um die Inbetriebnahme des als Primärteil wirkenden ersten Übertragerelementes (S) zu unterbinden und erst freizugeben, wenn das Positionsbestimmungssystem das Unterschreiten eines vordefinierten Abstandes zwischen den Spulen (1, 2) der Übertragerelemente ermittelt hat.

**Claims**

1. System for mutual relative position determination of two transducer elements of an arrangement for inductive energy transmission, comprising at least one first transducer element (S) with a preferably planar first coil (1) and at least one second transducer element (R) with a preferably planar second coil (2), wherein the circumference of the first coil (1) is preferably greater than that of the second coil (2), wherein at least the first transducer element (S) has a shield (3) for the first coil (1) made from a material with a magnetic conductivity or permeability of $\mu 4 \geq 4$, in particular from ferrite, said shield (3) at least partially surrounds the first coil (1), is open in the direction of the second coil (2), and comprises a plurality of measuring coils (4) which are connected to an evaluation unit (5), in which currents or voltages, induced in the measuring coils (4) by a generated measuring magnetic field (M), are evaluated and a characteristic signal is generated for the distance of the centers of symmetry (ZS, ZR) of the first coil (1) and second coil (3) in the substantially parallel position of the coils (1, 2),
**characterized in that**
at least four measuring coils (4), whose axes are parallel to the plane of the first coil (1) and preferably located in the plane of the shield (3), are applied on the first transducer element (S), wherein in each case two measuring coils (4) are parallel and preferably coaxial to one another and are located on opposite sides of the center of symmetry (ZS) of the first coil (1), wherein the axes of one group of parallel measuring coils (4) define an angle not equal to zero, preferably a right angle, with the axes of the second group of parallel measuring coils (4);
the evaluation unit (5) is designed both to evaluate the signal level and also to determine the phase information of the signals of the measuring coils (4); and
the evaluation unit (5) is equipped to evaluate the relative phase position of signals between two coils (4) in each case within one group of parallel measuring coils (4).

2. System according to claim 1, **characterized in that** an additional parallel and preferably coaxial measuring coil (4), which extends preferably through the center of symmetry (ZS) of the first coil (1), is located between the measuring coils (4) of at least one group of parallel measuring coils, preferably between the measuring coils (4) of both groups of measuring coils.

3. System according to claim 1 or 2, **characterized in that** the transducer element (R) with the second coil (2) is opposite to the first transducer element (S) with the measuring coils (4) and is designed for emitting the measuring magnetic field (M) by means of this second coil (2).

4. System according to claim 3, **characterized in that** the transducer element (R) with the second coil (2), opposite the first transducer element (S) with the measuring coils (4), is designed for emitting the measuring magnetic field (M) by means of a transmission antenna (6) which is different from the second coil (2).

5. System according to one of claims 1 to 4, **characterized in that** the diameter of the first coil (1) is greater than the diameter of the second coil (2) .

6. System according to one of claims 1 to 5, **characterized in that** the first transducer element (S) is arranged in an electronics housing, and that the measuring coils (4) are arranged outside of the electronics housing of the first transducer element (S), wherein preferably at least some of the measuring coils (4) are applied on the shield (3).

7. Method for determining the relative position of two transducer elements (S, R) for inductive energy transmission using a position determination system according to one of claims 1 to 6, comprising the generation of a measuring magnetic field (M) in one of the transducer elements (S, R) and evaluation of the currents or voltages, induced by the measuring magnetic field (M) in measuring coils (4) of the other transducer element (S, R), to generate a characteristic signal for the distance of the centers of symmetry (ZS, ZR) of the coils (1, 2) of the transducer elements (S, R),
**characterized in that**
at least four measuring coils (4), whose axes are parallel to the plane of the first coil (1) and preferably located in the plane of the shield (3), are applied on the first transducer element (S), wherein in each case two measuring coils (4) are parallel and preferably coaxial to one another and are located on opposite sides of the center of symmetry (ZS) of the first coil (1), wherein the axes of one group of parallel measuring coils (4) define an angle not equal to zero, preferably a right angle, with the axes of the second group of parallel measuring coils (4);
the evaluation unit (5) is designed both to evaluate the signal level and also to determine the phase information of the signals of the measuring coils (4);
the relative phase position of the signals between two coils (4) in each case within one group of parallel measuring coils (4) is evaluated in the evaluation unit (5).

8.  Method according to claim 7, **characterized in that** the coil (2) of a transducer element (R) is excited to generate the measuring magnetic field (M), and that the signal level of the measuring coils (4) is evaluated in the evaluation unit (5) of the other transducer element (S), wherein preferably the relative height of the signal level is compared.

9.  Method according to claim 8, **characterized in that** an additional parallel and preferably coaxial measuring coil (4), which extends preferably through the center of symmetry (ZS) of the first coil (1), is located in each case between the measuring coils (4) of at least one group of parallel measuring coils, preferably between the measuring coils (4) of both groups of measuring coils, and that the signal level of the additional measuring coil (4) and the difference (D) of the signal level of the outermost measuring coils (4) are formed and correlated.

10. Method according to one of claims 7 to 9, **characterized in that** the signal level of the additional measuring coil (4) and the difference (D) of the signal level of the outermost measuring coils (4) is correlated together with the relative phase position of these signals, and a unique value is determined therefrom for each relative position of the centers of symmetry (ZS, ZR) of the coils (1, 2).

11. System for inductive energy transmission, in particular for charging electrically driven vehicles, with at least two transducer elements and a position determining system according to one of claims 1 to 6, **characterized in that** the first transducer element (S) is designed as the primary part for generating a magnetic field and the second transducer element (R) is designed as the secondary part on the vehicle for receiving the energy via the magnetic field.

12. System according to claim 11, **characterized in that** the evaluation unit (5) of the transducer element (S) acting as the primary part is designed to carry out a method according to one of claims 7 to 10.

13. System according to claim 12, **characterized in that** the evaluation unit (5) is designed to prevent the start up of the transducer element (S) acting as the primary part, and to release it only when the positioning determination system has determined that a predefined distance has been undershot between the coils (1, 2) of the transducer elements.

**Revendications**

1.  Système, destiné à déterminer la position relative réciproque de deux éléments de transfert d'un ensemble de transfert inductif d'énergie, comprenant au moins un premier élément de transfert (S), doté d'une première bobine (1) de préférence plane et au moins un deuxième élément de transfert (R), doté d'une deuxième bobine (2), de préférence plane, la périphérie de la première bobine (1) étant de préférence supérieure à celle de la deuxième bobine (2), au moins le premier élément de transfert (S) comportant un blindage (3) en une matière faisant preuve d'une conductibilité magnétique, respectivement d'une perméabilité de $\mu r \geq 4$, notamment en ferrite pour la première bobine (1), lequel blindage (3) entourant au moins partiellement la première bobine (1), étant ouvert en direction de la deuxième bobine (2), et comprenant plusieurs bobines de mesure (4), qui sont connectées avec une unité d'évaluation (5) dans laquelle des courants ou tensions induit(e)s dans les bobines de mesure (4) par un champ magnétique de mesure (M) créé sont évalué(e)s et un signal caractéristique de l'écart entre les centres de symétrie (ZS, ZR) et la première bobine (1) et la deuxième bobine (2) lors d'une position sensiblement parallèle des bobines (1, 2) est généré,
**caractérisé en ce que**

sur le premier élément de transfert (S) sont montées au moins quatre bobines de mesure (4) dont les axes sont parallèles au plan de la première bobine (1) et se situent de préférence dans le plan du blindage (3), chaque fois deux bobines de mesure (4) se situant à la parallèle et de préférence de manière coaxiale l'une par rapport à l'autre et sur des côtés mutuellement opposés du centre de symétrie (ZS) de la première bobine (1), les axes d'un groupe de bobines de mesure (4) parallèles incluant un angle différent de zéro, de préférence un angle droit avec les axes du deuxième groupe de bobines de mesure (4) parallèles ;

l'unité d'évaluation (5) est conçue aussi bien pour évaluer les niveaux des signaux que pour déterminer l'information de phase des signaux des bobines de mesure (4) ; et

l'unité d'évaluation (5) est aménagée pour évaluer la position relative des phases des signaux entre chaque fois deux bobines de mesure (4) au sein d'un groupe de bobines de mesure (4) parallèles.

2. Système selon la revendication 1, **caractérisé en ce qu'**entre les bobines de mesure (4) d'au moins un groupe de bobines de mesure parallèles, de préférence entre les bobines de mesure (4) des deux groupes de bobines de mesure, se situe chaque fois une bobine de mesure (4) supplémentaire, parallèle et de préférence coaxiale qui s'écoule de préférence à travers le centre de symétrie (ZS) de la première bobine (1).

3. Système selon la revendication 1 ou 2, **caractérisé en ce que** l'élément de transfert (R) doté de la deuxième bobine (2) se situe au vis-à-vis de l'élément de transfert (S) doté des bobines de mesure (4) et est conçu pour émettre le champ magnétique de mesure (M) à l'aide de ladite deuxième bobine (2).

4. Système selon la revendication 3, **caractérisé en ce que** l'élément de transfert (R) doté de la deuxième bobine (2), situé au vis-à-vis du premier élément de transfert (S) doté des bobines de mesure (4) est conçu pour émettre le champ magnétique de mesure (M) à l'aide d'une antenne émettrice (6) différente de la deuxième bobine (2).

5. Système selon l'une quelconque des revendications 1 à 4, **caractérisé en ce que** le diamètre de la première bobine (1) est supérieur au diamètre de la deuxième bobine (2).

6. Système selon l'une quelconque des revendications 1 à 5, **caractérisé en ce que** le premier élément de transfert (S) est placé dans un boîtier électronique et **en ce que** les bobines de mesure (4) sont placées à l'extérieur du boîtier électronique du premier élément de transfert (S), de préférence certaines des bobines de mesure (4) étant montées sur le blindage (3).

7. Procédé, destiné à déterminer la position relative réciproque de deux éléments de transfert (S, R) pour le transfert inductif d'énergie en utilisant un système de détermination de la position selon l'une quelconque des revendications 1 à 6, comprenant les étapes consistant à créer un champ magnétique de mesure (M) dans l'un des éléments de transfert (S, R) et à évaluer les courants ou les tensions induit(e)s par le champ magnétique de mesure (M) dans des bobines de mesure (4) de l'autre élément de transfert (S, R), pour générer un signal caractéristique de l'écart des centres de symétrie (ZS, ZR) des bobines (1, 2) des éléments de transfert (S, R),

**caractérisé en ce que**

sur le premier élément de transfert (S) sont montées au moins quatre bobines de mesure (4), dont les axes sont parallèles au plan de la première bobine (1) et qui se situent de préférence dans le plan du blindage (3), chaque fois deux bobines de mesure (4) se situant à la parallèle et de préférence de manière coaxiale l'une par rapport à l'autre et sur des côtés mutuellement opposés du centre de symétrie (ZS) de la première bobine (1), les axes d'un groupe de bobines de mesure (4) parallèles incluant un angle différent de zéro, de préférence un angle droit avec les axes du deuxième groupe de bobines de mesure (4) parallèles,

l'unité d'évaluation (5) est conçue aussi bien pour évaluer les niveaux des signaux que pour déterminer l'information de phase des signaux des bobines de mesure (4) ; et

dans l'unité d'évaluation (5) est évaluée la position relative des phases des signaux entre chaque fois deux bobines de mesure (4) au sein d'un groupe de bobines de mesure (4) parallèles.

8. Procédé selon la revendication 7, **caractérisé en ce que** la bobine (2) d'un élément de transfert (R) est excitée pour créer le champ magnétique de mesure (M), et **en ce que** dans l'unité d'évaluation (5) de l'autre élément de transfert (S) sont évalués les niveaux des signaux des bobines de mesure (4), de préférence étant comparée la hauteur relative des niveaux de signaux.

9. Procédé selon la revendication 8, **caractérisé en ce qu'**entre les bobines de mesure (4) se situe au moins un groupe de bobines de mesure parallèles, de préférence entre les bobines de mesure (4) des deux groupes de bobines de mesure se situe chaque fois une bobine de mesure (4) supplémentaire, parallèle et de préférence coaxiale, qui s'écoule de préférence à travers le centre de symétrie (ZS) de la première bobine (1), et **en ce que** le niveau des signaux de la bobine de mesure (4) supplémentaire et la différence (D) des niveaux des signaux des bobines de mesure (4) les plus extérieures sont formés et mis en relation.

10. Procédé selon l'une quelconque des revendications 7 à 9, **caractérisé en ce que** les niveaux des signaux de la bobine de mesure (4) supplémentaire et la différence (D) des niveaux des signaux des bobines de mesure (4) les plus extérieures sont mis en relation conjointement avec la position de phase respective desdits signaux et à partir de ceci, il est déterminé une valeur univoque pour chaque position relative des centres de symétrie (ZS, ZR) des bobines (1, 2).

11. Système destiné au transfert d'énergie inductif, notamment à charger des véhicules à entraînement électrique, doté d'au moins deux éléments de transfert d'un système de détermination de la position selon l'une quelconque des revendications 1 à 6, **caractérisé en ce que** le premier élément de transfert (S) est conçu sous la forme de partie primaire pour la génération d'un champ magnétique et le deuxième élément de transfert (R) est conçu sous la forme de partie secondaire sur le véhicule, pour recevoir l'énergie via le champ magnétique.

12. Système selon la revendication 11, **caractérisé en ce que** l'unité d'évaluation (5) du premier élément de transfert (S) assurant la fonction de partie primaire est réalisé pour exécuter un procédé selon l'une quelconque des revendications 7 à 10.

13. Système selon la revendication 12, **caractérisé en ce que** l'unité d'évaluation (5) est conçue pour empêcher la mise en service du premier élément de transfert (S) assurant la fonction de partie primaire et pour ne la libérer qu'une fois que le système de détermination de la position a déterminé la non-atteinte d'un écart prédéfini entre les bobines (1, 2) des éléments de transfert.

**FIG. 1**

FIG. 2

**Y=0, Z=160: Messwerte mit Wicklungsabstand x$_0$=104mm**

Wicklung Ax    Wicklung Bx    Wicklung Cx

FIG. 3

**Y=0, Z=110: Rückberechnete Analogwerte**

Spannung(A)    Spannung(B)    Spannung(C)    Spannung(D=A-C)

FIG. 4

B/D-Ortskurven

FIG. 5

Spannungszeigerlänge r mit d=1.13, e=0.18

FIG. 6

B/D-Ortskurven und Nachbildung mit d=1.13, e=0.18

FIG. 7

Spannungszeigerwinkel α mit d=1.13, e=0.18

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120119698 A1
- EP 2735083 A1
- WO 2014068384 A2
- DE 102010053058 A1
- DE 102011083427 A1
- EP 2584665 A2
- DE 102010012356 A1
- DE 102011015980 A1
- JP 5635134 B